# EUROPEAN PATENT APPLICATION

(11) **EP 1 622 128 A2**
(43) Date of publication of application: **01.02.2006**
(21) Application number: 05105688.5
(22) Date of filing: 24.06.2005
(51) Int. Cl.: G11B 5/53

(54) **A head drum assembly**

(30) Priority: 29.07.2004 KR 2004059544
(71) Applicant: SAMSUNG ELECTRONICS CO., LTD., Suwon 442-742, Gyeonggi-do (KR)
(72) Inventor: Kim, Myoung-joon, 2-201, Green Villa, Gyeonggi-do (KR); Baik, Chung-hum, 106-1102,dongsuwon LG Village, Gyeonggi-do (KR); Kim, Bong-joo, 208-1001, dongsuwon LG Village, Gyeonggi-do (KR); Kim, Jun-young, 108-1904,Dongsuwon LG Village 1st, Gyeonggi-do (KR); Cho, Young-ho, Yeongtong-gu, Suwon-si,Gyeonggi-do (KR); Seo, Jae-kab, 114-507,101-114,Dongsuwon LG Village, Gyeonggi-do (KR)
(74) Representative: Geary, Stuart Lloyd

(57) **Abstract**

A head drum assembly of a magnetic recording and reproducing apparatus includes a fixed drum secured to a shaft and a rotary drum rotatably fitted on the shaft to be opposite to the fixed drum. A motor rotor is supported in the rotary drum. A stator is installed on the fixed drum to be opposite to the motor rotor. A yoke is secured to the fixed drum so that a predetermined air gap is provided between the stator and the yoke.

## Description

The present invention relates to a head drum for a tape deck, comprising a stator and a yoke.

In general, a magnetic recording and reproducing apparatus is an appliance for recording information to and/or reproducing information from a recording medium such as a magnetic tape. Examples include video cassette tape recorders (VCR) and camcorders.

Such a magnetic recording and reproducing apparatus includes a main deck, a sub-deck which is slides and is installed on the main deck, a head drum assembly which rotates and is installed on the main deck for recording information to and/or reproducing from a magnetic tape, and tape guide means ensuring smooth running of the tape.

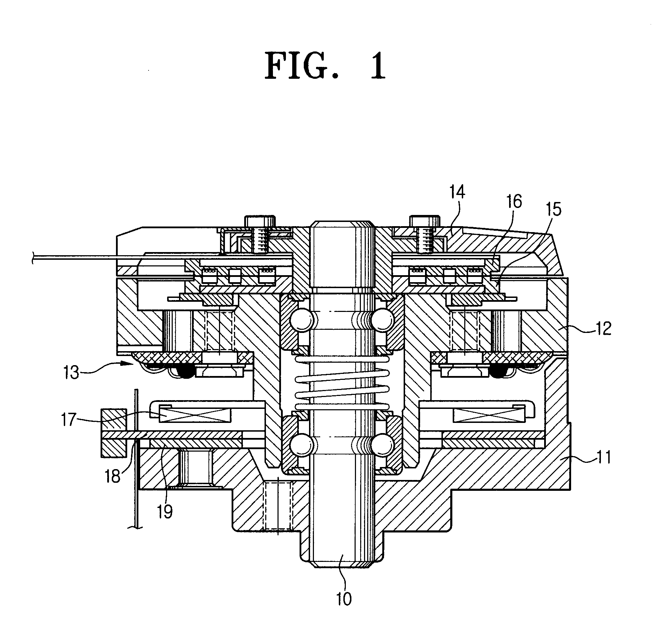

The head drum assembly is typically installed at a predetermined angle to the main deck so that it is tilted as it rotates. This improves its recording and reproducing capability. An example of such a head drum assembly is illustrated in Figure 1.

Referring to Figure 1, a fixed drum 11 is fitted on a shaft 10. A rotary drum 12 is fitted on the shaft 10 to be above and opposite the fixed drum 11. The rotary drum 12 rotates about the shaft 10. A magnetic head 13 for scanning and recording and reproducing information to/from a magnetic tape as it is run over the head drum is supported by the rotary drum 12. In addition, a drum cover 14 is located on the rotary drum 12 and secured to the shaft 10. The rotary drum 12 and the drum cover 14 are respectively provided with a rotary transfer 15 and a fixed transfer 16 for transferring a signal read by the magnetic head 13.

The rotary drum 12 is equipped with a motor rotor 17, and the fixed drum 11 is equipped with a stator 18 opposite to the motor rotor 17. The motor rotor 17 is a magnet that generates the driving force for rotating the rotary drum 12 by cooperation with the stator 18.

In addition, a yoke 19 is installed on the bottom of the stator 18. The yoke 19 is provided to concentrate the magnetic force generated by the stator 18. This improves the current characteristics for rotating the rotary drum 12.

There is a recent trend to produce smaller magnetic recording and reproducing apparatuses that employ a head drum assembly as mentioned above. Accordingly, a lot of restrictions are imposed on the size of the battery used in such an apparatus. However, it is also desirable to increase the life expectancy of the battery.

Accordingly, a need exists for a magnetic recording and reproducing apparatus that has an improved current consumption characteristic used for driving the head drum of the apparatus. Thus extending battery life.

Accordingly, an object of the present invention is to provide a head drum assembly for a magnetic recording and reproducing apparatus, wherein the head drum is structured to reduce current consumption.

The present invention relates to a head drum for a tape deck, comprising a stator and a yoke.

A head drum according to the present invention is characterised by an air gap between the stator and the yoke.

Other additional and/or preferred features are set forth in claims 2 to 5 appended hereto.

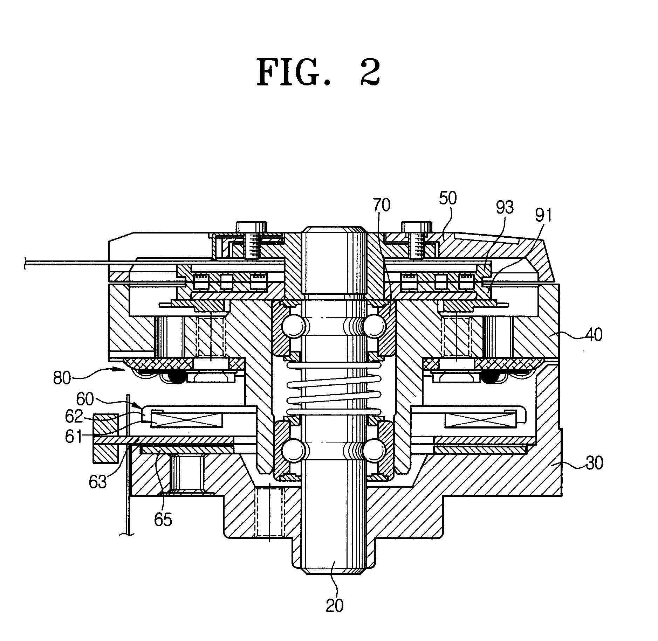

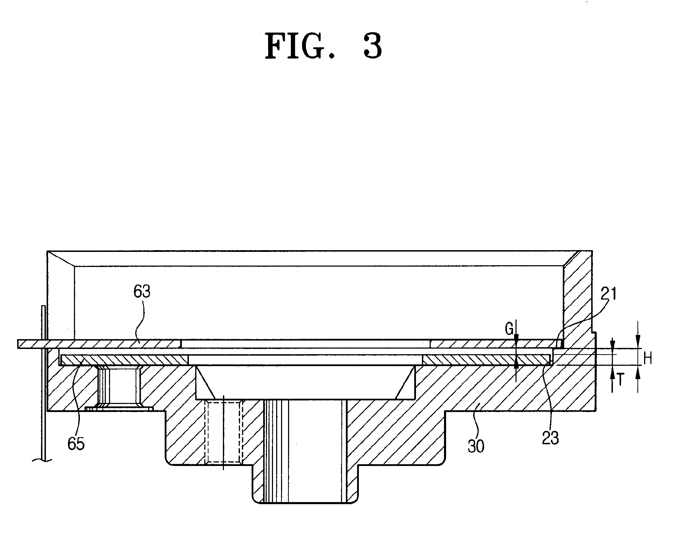

An embodiment of the present invention will now be described, by way of example only, and with reference to Figures 2 and 3, in which:
Figure 1 is a cross-sectional view showing a known head drum assembly of a magnetic recording and reproducing apparatus;
Figure 2 is a schematic cross-sectional view showing a head drum assembly of a magnetic recording and reproducing apparatus according to an embodiment of the present invention; and
Figure 3 is an elevational view in cross section of the fixed drum extracted from Figure 2.

Throughout the drawings, like reference numerals will be understood to refer to like parts, components and structures.

In the following description, the same drawing reference numerals are used for the same elements even in different drawings. The matters defined in the description, such as a detailed construction and elements thereof, are provided to assist in a comprehensive understanding of the invention. Thus, it is apparent that the present invention may be carried out without those defined matters. Also, well-known functions or constructions are omitted to provide a clear and concise description of the exemplary embodiments of the present invention.

Referring to Figure 2, the head drum assembly according to an embodiment of the present invention includes a fixed drum 30 secured to a shaft 20, a rotary drum 40 installed above the fixed drum 30 for rotation around the shaft 20, a drum cover 50 installed above the rotary drum 40 and a driving unit 60 for driving the rotary drum 40.

The fixed drum 30 is fitted on and secured to the shaft 20. The rotary drum 40 is fitted on the shaft 20 above and opposite the rotary drum 40. A bearing 70 is located between the rotary drum 40 and the shaft 20.

Additionally, the rotary drum 40 supports a magnetic head 80 so that the magnetic head 80 scans a moving magnetic tape to record information on or to reproduce information from the magnetic tape.

The drum cover 50 positioned above the rotary drum 40 is fitted on and secured to the shaft 20. The drum cover 50 and the rotary drum 40 are provided with a fixed (or static) transfer 93 and a rotary transfer 91, respectively. These are configured to transfer the information read by the magnetic head 80.

The driving unit 60 includes a motor rotor 61 installed on the rotary drum 40 and a motor stator 63 installed on the fixed drum 30.

The motor rotor 61 is a doughnut-shaped magnet, which is supported by a rotor case 62 installed on the rotary drum 40.

The motor stator 63 is fitted on the fixed drum 30 and is spaced apart from and opposite to the motor rotor 61. The motor stator 63 is configured as a fine pattern coil formed on a PCB.

Further, a yoke 65 is installed on the under-side of the motor stator 63. The yoke 65 is fixed in place by being attached to the fixed drum 30 with adhesive or the like.

Referring to Figure 3, a predetermined air gap G is provided between the motor stator 63 and the yoke 65. The air gap G is preferably formed in the range of about 0.2 to about 0.4 mm. To provide this air gap G, it is advantageous if the fixed drum 20 is constructed as follows.

Specifically, the top of the fixed drum 30, which faces the rotary drum, is provided with a stator seating part 21 on which the motor stator 63 is seated. Additionally, a yoke reception part which receives the yoke 65 is formed at a predetermined depth on the inward side of the stator seating part 21. Therefore, a step is formed between the stator seating part 21 and the yoke reception part 23. The depth H of the yoke reception part 23 ranges preferably from about 0.7 to about 1.1 mm. The thickness T of the yoke 65 ranges preferably from about 0.5 to about 0.7 mm.

With this arrangement, it is possible to assemble the yoke 65 and the rotor stator 63 so that the air gap G is provided between them and that the air gap G is maintained at an appropriate size.

The head drum assembly constructed according to an embodiment of the present invention improves the magnetic force generated from the motor stator 63 because of the size of the air gap G between the yoke 65 and the stator 63. As the magnetic force is improved in this manner, current consumption is reduced when generating a given level of driving force. Accordingly, current consumption for driving the head drum is reduced as compared to the prior art.

This is specifically confirmed from the results listed in the following table, wherein the results were obtained from a test comparing several embodiments of the present invention with a comparative example.

**Table**

| Air gap (G) | Consumption Current | Remark |
|---|---|---|
| 0 mm | 0.1 | Prior art |
| 0.3 mm | 0.070 | Embodiment 1 |
| 0.5 mm | 0.075 | Embodiment 2 |
| 0.7 mm | 0.084 | Embodiment 3 |

The table shows results obtained by a test performed to measure current consumed for driving a head drum assembly while varying the air gap G thereof. As is shown in the table, the current consumption of embodiments 1 to 3 provided with air gap G is reduced as compared that of the prior art which does not have an air gap. In particular, it is appreciated that when the air gap G is 0.3 mm, the current consumption characteristic is most preferable. In this event, the consumption current is reduced by approximately 30% when compared with the prior art. This prolongs the battery life.

From the test as described above, it is concluded that it is preferable to maintain an air gap G at about 0.3 mm. However, current consumption is improved with respect to the prior art when the air gap is within the range of about 0.2 mm to about 0.4 mm.

According to the inventive head drum assembly of a magnetic recording and reproducing apparatus as described above, consumption current for driving the head drum assembly is reduced by providing an air gap between the motor stator and the yoke thereof.

As a result, there is an advantage in that a term for using a battery is prolonged in an appliance employing an exemplary embodiment of the inventive head drum assembly.

While the preferred embodiments of the present invention have been shown and described in order to exemplify the principle of the present invention, the present invention is not limited to the specific embodiments. It will be understood that various modifications and changes may be made by one skilled in the art without departing from the invention as defined by the appended claims. Therefore, it shall be considered that such modifications, changes and equivalents thereof are all included within the scope of the present invention.

## Claims

1. A head drum for a tape deck, comprising a stator (63) and a yoke (65), **characterised by** an air gap (G) between the stator (63) and the yoke (65).

2. A head drum according to claim 1, wherein the air gap (G) is configured to achieve a reduction in current used by the head drum compared to the presence of no air gap.

3. A head drum according to claim 2, wherein the air gap (G) is configured to substantially optimise the reduction in current.

4. A head drum according to any one of claims 1 to 3, wherein the air gap (G) is between 0.2mm and 0.4 mm thick.

5. A head drum according to any one of claims 1 to 4, wherein the air gap (G) is substantially 0.3mm thick.

6. A head drum assembly of a magnetic recording and reproducing apparatus, comprising:
a fixed drum secured to a shaft;
a rotary drum rotatably fitted on the shaft to be opposite to the fixed drum, wherein a motor rotor is supported in the rotary drum;
a stator installed on the fixed drum to be opposite to the motor rotor; and
a yoke secured to the fixed drum so that a predetermined air gap is provided between the stator and the yoke.

7. The head drum assembly as claimed in claim 6, wherein
the air gap is ranged from about 0.2 mm to about 0.4 mm.

8. The head drum assembly as claimed in claim 6, wherein
a stator seating part is formed on a surface of the fixed drum faced to the rotary drum so that the stator is seated on the stator seating part; and
a yoke reception part is formed to be stepped from the stator seating part and to receive the yoke.

9. The head drum assembly as claimed in claim 8, wherein
the yoke reception part is stepped inwardly from the stator seating part.

10. The head drum assembly as claimed in claim 8, wherein
the depth of the yoke reception part is larger than the thickness of the yoke.

11. The head drum assembly as claimed in claim 10, wherein
the depth of the yoke reception part is ranged from about 0.7 mm to about 1.1 mm.

12. The head drum assembly as claimed in claim 7, wherein
a stator seating part is formed on a surface of the fixed drum faced to the rotary drum so that the stator is seated on the stator seating part; and
a yoke reception part is formed to be stepped from the stator seating part and to receive the yoke.

13. The head drum assembly as claimed in claim 12, wherein
the yoke reception part is stepped inwardly from the stator seating part.

14. A magnetic recording and reproducing apparatus, comprising:
a deck; and
a head drum assembly installed on the deck, the head drum assembly including
a fixed drum secured to a shaft;
a rotary drum rotatably fitted on the shaft to be opposite to the fixed drum, wherein a motor rotor is supported in the rotary drum;
a stator installed on the fixed drum to be opposite to the motor rotor; and
a yoke secured to the fixed drum so that a predetermined air gap is provided between the stator and the yoke.

15. The magnetic recording and reproducing apparatus as claimed in claim 14, wherein
the air gap is ranged from about 0.2 mm to about 0.4 mm.

16. The magnetic recording and reproducing apparatus as claimed in claim 14, wherein
a stator seating part is formed on a surface of the fixed drum faced to the rotary drum so that the stator is seated on the stator seating part; and
a yoke reception part is formed to be stepped from the stator seating part and to receive the yoke.

17. The head drum assembly as claimed in claim 16, wherein
the yoke reception part is stepped inwardly from the stator seating part.

18. The magnetic recording and reproducing apparatus as claimed in claim 16, wherein
the depth of the yoke reception part is larger than the thickness of the yoke.

19. The magnetic recording and reproducing apparatus as claimed in claim 18, wherein
the depth of the yoke reception part is ranged from about 0.7 mm to about 1.1 mm.

20. The head drum assembly as claimed in claim 18, wherein
a stator seating part is formed on a surface of the fixed drum faced to the rotary drum so that the stator is seated on the stator seating part; and
a yoke reception part is formed to be stepped from the stator seating part and to receive the yoke.

21. The head drum assembly as claimed in claim 20, wherein
the yoke reception part is stepped inwardly from the stator seating part.
